# EUROPÄISCHE PATENTSCHRIFT

(11) **EP 1 686 093 B1**
(45) Veröffentlichungstag und Bekanntmachung des Hinweises auf die Patenterteilung: **16.03.2011**
(21) Anmeldenummer: 05006062.3
(22) Anmeldetag: 19.03.2005
(51) Int. Cl.: C01B 33/12

(54) **Pyrogen hergestelltes Siliciumdioxidpulver**
Pyrogenically produced silicium dioxide
Silice obtenue par pyrogénèse

(30) Priorität: 12.01.2005 DE 102005001414
(43) Veröffentlichungstag der Anmeldung: 02.08.2006
(73) Patentinhaber: Evonik Degussa GmbH, 45128 Essen (DE)
(72) Erfinder: Schumacher, Kai, Dr., 65719 Hofheim (DE); Ishibashi, Naruyasu, Yokkaichi 510-0074 (JP); Kobayashi, Hitoshi, Yokkaichi 510-0854 (JP); Brandl, Paul, Dr., Yokkaichi 512-0933 (JP)

(56) Entgegenhaltungen:
- EP-A- 0 725 037

## Beschreibung

Die Erfindung betrifft ein pyrogen hergestelltes Siliciumdioxidpulver, dessen Herstellung und Verwendung.

Die Flammenhydrolyse zur Herstellung von Siliciumdioxid ist ein seit langem bekanntes, großtechnisch durchgeführtes Verfahren. Bei diesem Verfahren wird ein verdampftes oder gasförmiges hydrolysierbares Siliciumhalogenid mit einer Flamme vermengt, die durch Verbrennung eines wasserbildenden, Wasserstoff enthaltenden Brennstoffs und eines sauerstoffhaltigen Gases gebildet worden ist. Die Verbrennungsflamme stellt dabei Wasser für die Hydrolyse des Siliciumhalogenides und genügend Wärme zur Hydrolysenreaktion zur Verfügung. Das in den Restgasen der Reaktion mitgetragene Siliciumdioxidpulver wird üblichen Kühl- und Feststofftrennverfahren unterworfen. Gewöhnlich wird Siliciumtetrachlorid eingesetzt. Es ist jedoch auch bekannt, Dichlorsilan, Trichlorsilan einzusetzen. Beim Einsatz von kohlenstoffhaltigen Einsatzstoffen, wie beispielsweise Methyltrichlorsilan, Dimethyldichlorsilan, Methyldichlorsilan, Dibutyldichlorsilan, Ethyltrichlorsilan, Propyltrichlorsilan findet zusätzlich ein Oxidationsprozess zur Überführung des Kohlenstoffes in Kohlendioxid statt.

In Folge wird ein Siliciumdioxidpulver, welches bei einem Verfahren bei dem beide Reaktionstypen, nämlich Flammenhydrolyse und Oxidation, ablaufen, gebildet wird, als ein pyrogen hergestelltes Siliciumdioxid bezeichnet.

Bei der Reaktion werden zunächst hochdisperse, nicht poröse Primärpartikel gebildet, die im weiteren Reaktionsverlauf zu Aggregaten zusammenwachsen und diese sich weiter zu Agglomeraten zusammenlagern können. Die BET-Oberfläche dieser Primärpartikel liegt in der Regel zwischen 5 und 600 m²/g. Das Pulver weist auf seiner Oberfläche freie Hydroxylgruppen auf.

Das so hergestellte Siliciumdioxidpulver findet in vielen Anwendungsbereichen Verwendung. Bei vielen Anwendungen ist die Zeit, die für die Einarbeitung in flüssige Medien benötigt wird, ein wesentlicher Kostenfaktor. Es hat sich gezeigt, dass für Siliciumdioxidpulver nach dem Stand der Technik, obwohl sie nach dem gleichen Reaktionstyp hergestellt wurden und auch gleiche oder ähnliche der üblicherweise zur Charakterisierung angegebenen Parameter, wie beispielsweise die BET-Oberfläche, aufweisen, sehr lange Einarbeitungszeiten in flüssige Medien erforderlich sind.

Aufgabe der Erfindung ist es daher, ein Siliciumdioxidpulver bereitzustellen, das sich schnell in flüssige Medien einarbeiten läßt.

Aufgabe der Erfindung ist weiterhin ein Verfahren zur Herstellung dieses Pulvers bereitzustellen.

Gegenstand der Erfindung ist ein pyrogen hergestelltes Siliciumdioxidpulver in Form von Aggregaten von Primärpartikeln mit einer BET-Oberfläche von 300 ± 25 m²/g, bei dem die Aggregate
- eine mittlere Fläche von 4800 bis 6000 nm²,
- einen mittleren, äquivalenten Kreisdurchmesser (ECD = Equivalent Circle Diameter) von 60 bis 80 nm und
- einen mittleren Umfang von 580 bis 750 nm aufweisen.

Dabei wird die BET-Oberfläche bestimmt nach DIN 66131.

Die Aggregatgrößen werden durch Bildanalyse mittels eines TEM Gerätes der Fa. Hitachi H 7500 und einer CCD-Kamera MegaView II, der Fa. SIS bestimmt. Die Bildvergrößerung zur Auswertung beträgt 30000:1 bei einer Pixeldichte von 3,2 nm. Die Anzahl der ausgewerteten Teilchen ist größer als 1000. Die Präparation erfolgt gemäss ASTM3849-89. Die untere Schwellwertgrenze in bezug auf Detektion liegt bei 50 Pixeln.

Die BET-Oberfläche kann bevorzugt 300 ± 15 m²/g und besonders bevorzugt 300 ± 10 m²/g sein.

Weiterhin kann ein erfindungsgemäßes pyrogen hergestelltes Siliciumdioxidpulver bevorzugt sein, bei dem die Aggregate
- eine mittlere Fläche von 5000 bis 5700 nm²,
- einen mittleren, äquivalenten Kreisdurchmesser von 65 bis 75 nm und
- einen mittleren Umfang von 600 bis 720 nm aufweisen.

Weiterhin kann ein erfindungsgemäßes pyrogen hergestelltes Siliciumdioxidpulver bevorzugt sein, bei dem der maximale Aggregatdurchmesser zwischen 100 und 140 nm und der minimale Aggregatdurchmesser zwischen 60 und 90 nm ist.

Weiterhin kann ein erfindungsgemäßes pyrogen hergestelltes Siliciumdioxidpulver bevorzugt sein, bei dem der Chloridgehalt kleiner als 250 ppm ist. Besonders bevorzugt ist ein Chloridgehalt von weniger als 150 ppm.

Weiterhin kann ein erfindungsgemäßes pyrogen hergestelltes Siliciumdioxidpulver bevorzugt sein, bei dem der Kohlenstoffgehalt kleiner als 500 ppm ist. Besonders bevorzugt ist ein Kohlenstoffgehalt von weniger als 300 ppm.

Ein weiterer Gegenstand der Erfindung ist ein Verfahren zur Herstellung des erfindungsgemäßen Siliciumdioxidpulvers bei dem man
- ein Gemisch von Siliciumverbindungen, getrennt oder gemeinsam, verdampft, die Dämpfe mittels eines Traggases in eine Mischkammer überführt, mit
- SiCl₄ als erster Komponente mit einem Anteil 60 bis 100 Gew.-% bezogen auf das Gemisch, und
- einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇)SiCl₃, mit einem Anteil von 0 bis 40 Gew.-%, bevorzugt 5 bis 30 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumverbindungen, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,05 bis 4, bevorzugt von 0,15 bis 3, liegt,
- anschließend den Feststoff von gasförmigen Stoffen abtrennt, und nachfolgend den Feststoff mit Wasserdampf behandelt,
   wobei
- die Gesamtmenge an Sauerstoff mindestens ausreichend ist zur vollständigen Verbrennung des Brenngases und der Siliciumverbindungen und
- die Menge der Einsatzstoffe bestehend aus Siliciumverbindungen, Brenngas, Primärluft und Sekundärluft so gewählt ist, dass eine adiabate Flammentemperatur T_{ad} von 1390 bis 1450°C resultiert, mit
   T_{ad} = Temperatur Einsatzstoffe + Summe der Reaktionsenthalpien der Teilreaktionen / Wärmekapazität der Stoffe, die die Reaktionskammer verlassen, umfassend Siliciumdioxid, Wasser, Chlorwasserstoff, Kohlendioxid Sauerstoff, Stickstoff, und gegebenenfalls des Traggases, wenn dieses nicht Luft oder Stickstoff ist, wobei die spezifische Wärmekapazität dieser Stoffe bei 1000°C zugrunde gelegt wird.

Die Umsetzung der Siliciumverbindungen in Gegenwart von Sauerstoff und eines Brenngases liefert Siliciumdioxid, Wasser, Salzsäure und bei kohlenstoffhaltigen Siliciumverbindungen und/oder kohlenstoffhaltigen Brenngasen Kohlendioxid. Die Reaktionsenthalpien dieser Reaktionen können mittels dem Fachmann bekannter Standardwerken berechnet werden.

In Tabelle 1 sind einige ausgesuchte Werte von Reaktionsenthalpien der Umsetzung von Siliciumverbindungen in Gegenwart von Wasserstoff und Sauerstoff gegeben.

Besonders bevorzugt können Methyltrichlorsilan (MTCS, CH₃SiCl₃), Trichlorsilan (TCS, SiHCl₃) und/oder Dichlorsilan (DCS, SiH₂Cl₂) eingesetzt werden.

**Tabelle 1: Reaktionsenthalpien**

| | KJ/mol |
|---|---|
| H₂ | -241,8 |
| SiCl₄ | -620,1 |
| SiHCl₃ | -659,4 |
| SiH₂Cl₂ | -712,3 |
| C₃H₇SiCl₃ | -2700,2 |
| CH₃SiCl₃ | -928,3 |
| (CH₃)₃SiCl | -2733,8 |

Als Brenngase eignen sich Wasserstoff, Methan, Ethan, Propan und/oder Erdgas, wobei Wasserstoff bevorzugt ist.

Die Temperatur der Einsatzstoffe ist nicht limitiert, solange sie oberhalb der Siedetemperatur der höchst siedenden Siliciumverbindung liegt. Als vorteilhaft hat sich eine Temperatur der Einsatzstoffe von 90°C ± 40°C erwiesen.

Es kann ferner von Vorteil sein, wenn die Austrittsgeschwindigkeit des Reaktionsgemisches aus der Mischkammer in den Reaktionskammer 10 bis 80 m/s ist.

Ein weiterer Gegenstand der Erfindung ist die Verwendung des erfindungsgemäßen, pyrogen hergestellten Siliciumdioxidpulvers als Füllstoff in Kautschuk, Silikonkautschuk und Kunststoffen, zur Einstellung der Rheologie in Farben und Lacken, als Polyester, als Träger für Katalysatoren und zur Herstellung von Dispersionen.

### Beispiele

Die BET-Oberfläche wird bestimmt nach DIN 66131.

### Bestimmung der Einarbeitungszeit in Wasser

In einem 500 ml Gefäß mit einem Durchmesser von 80 mm werden 10 g Siliciumdioxidpulver vorgelegt. Unter Rühren mit einem Dissolver mit einer 70 mm Scheibe bei 500 U/min werden 50 g wässerige Salpetersäure (pH-Wert 3,90) zugegeben und die Zeit bestimmt, die nötig ist das Pulver zu benetzen. Die Einarbeitungszeit von Aerosil®300, Degussa dient als Vergleich und wird auf 100 normiert.

### Bestimmung der Viskosität in Polyvinylalkohol

60 g einer wässerigen fünfprozentigen Polyvinylalkohol-Lösung und 80 g demineralisiertes Wasser werden in einem 500 ml Gefäß mit einem Durchmesser vom 80 mm vorgelegt. Zu dieser Lösung werden 10 g Siliciumdioxidpulver gegeben und das Gemisch anschließend fünf Minuten mit einem Dissolver mit einer 50 mm Scheibe bei 2500 U/min dispergiert. Anschließend wird die Viskosität des Gemisches mit einem Haake Rheometer bei 2,7 s⁻¹ und 23°C bestimmt. Die Viskosität von Aerosil®300, Degussa dient als Vergleich und wird auf 100 normiert.

### Beispiel 1: Herstellung eines Siliciumdioxidpulvers

180 kg/h Siliciumtetrachlorid werden verdampft und mittels Stickstoff in die Mischkammer eines Brenners überführt. Gleichzeitig werden 58 Nm³/h Wasserstoff und 190 Nm³/h Primärluft in die Mischkammer gegeben. Das Gemisch weist eine Temperatur von 90°C auf. Es wird gezündet und in einer Flamme in eine Reaktionskammer hinein verbrannt. Die Austrittsgeschwindigkeit aus dem Brenner beträgt 30,3 m/s. Zusätzlich wird 60 Nm³/h Sekundärluft, die die Flamme umgibt, in die Reaktionskammer eingebracht. Das Verhältnis von Sekundärluft zu Primärluft beträgt 0,32.

Die Reaktionsgase und das entstandene Siliciumdioxid werden durch Anlegen eines Unterdruckes durch ein Kühlsystem gesaugt und dabei auf Werte zwischen 100 und 160°C abgekühlt. In einem Filter oder Zyklon wird der Feststoff vom Abgasstrom abgetrennt und nachfolgend bei einer Temperatur von 560°C mit Wasserdampf behandelt.

Die Beispiele 2 bis 9 werden analog durchgeführt.

Tabelle 2 gibt die Einsatzstoffe und Mengen der Beispiele 1 bis 9 wieder.

Tabelle 3 gibt die Reaktionsenthalpien, Wärmekapazitäten und adiabate Flammentemperaturen aus den Beispielen 1 bis 9 wieder.

Die Beispiele 1 bis 5 ergeben erfindungsgemäße Pulver. Die Beispiele 6 bis 9 sind Vergleichsbeispiele.

In den Beispielen 2 und 4 werden zwei, in Beispiel 3 werden drei Siliciumkomponenten eingesetzt.

In den Beispielen 1 und 3 werden hohe, beziehungsweise niedrige Anteile der ersten Siliciumkomponente Siliciumtetrachlorid eingesetzt.

In Beispiel 5 wird innerhalb des beanspruchten Bereiches ein hohes Verhältnis Sekundärluft/Primärluft eingestellt.

In den Beispielen 6 und 7 sind Einstellungen gewählt, die zu einer adiabaten Flammentemperatur ausserhalb des beanspruchten Bereiches führen.

In Beispiel 8 wird keine Sekundärluft zugeführt.

In Beispiel 9 ist das Verhältnis Sekundärluft/Primärluft ausserhalb des beanspruchten Bereiches.

Tabelle 4 zeigt analytische Daten der hergestellten Siliciumdioxidpulver, sowie eines kommerziell erhältlichen, pyrogen hergestellten Siliciumdioxidpulvers (Beispiel 10).

Die Beispiele 1 bis 5 zeigen, wie ein bestimmter enger Bereich der adiabaten Flammentemperatur durch Variation der Einsatzstoffmengen erhalten werden kann.

Weiterhin zeigen die Vergleichsbeispiele 6 und 7, dass bei gleicher Zusammensetzung der Siliciumverbindungen wie im Beispiel 1, keine erfindungsgemäßen Siliciumdioxidpulver erhalten werden. Die erhaltenen Pulver weisen BET-Oberflächen ausserhalb des beanspruchten Bereiches auf, Beispiel 6: 266 m²/g und Beispiel 7: 394 m²/g. In den Vergleichsbeispielen 6 und 7 sind die adiabaten Flammtemperaturen ausserhalb des beanspruchten Bereiches.

In den Vergleichsbeispielen 8 und 9 sind zwar die adiabaten Flammentemperaturen innerhalb des beanspruchten Bereiches, jedoch werden keine erfindungsgemäßen Siliciumdioxidpulver erhalten:

Im Beispiel 8 wird keine Sekundärluft zugeführt. Das erhaltene Pulver hat eine lange Einarbeitungszeit (151%).

In Beispiel 9 ist das Verhältnis Sekundärluft/Primärluft mit 4,2 ausserhalb des beanspruchten Bereiches. Das erhaltene Siliciumdioxidpulver weist mit 165% eine sehr hohe relative Viskosität auf.

Das Pulver aus Beispiel 1 ist ein kommerziell erhältliches Pulver, Aerosil®300, Degussa. Dieses Pulver weist zwar eine BET-Oberfläche auf, die im beanspruchten Bereich liegt, jedoch besitzt es eine deutlich höhere Viskosität und eine deutlich längere Einarbeitungszeit als die erfindungsgemäßen Pulver. Zum Vergleich der Werte für die relative Viskosität und die Einarbeitungszeit wird das Pulver 10 auf 100% normiert. Mittlere Aggregatfläche mittlerer, equivalenter Kreisdurchmesser und der mittlere Aggregatumfang liegen ausserhalb der beanspruchten Bereiche.

**Tabelle 2: Einsatzstoffe und Einsatzmengen**

| | | **gemäß Erfindung** | | | | | **Vergleich** | | | |
|---|---|---|---|---|---|---|---|---|---|---|
| **Beispiel** | | **1** | **2** | **3** | **4** | **5** | **6** | **7** | **8** | **9** |
| Siliciumtetrachlorid | kg/h | 180 | 160 | 150 | 115 | 6,5 | 180 | 6,5 | 150 | 6,5 |
| 2. Siliciumkomponente^{($)} | kg/h | 0 | MTCS 20 | MTCS 20 | MTCS 65 | 0 | 0 | 0 | MTCS 20 | 0 |
| 3. Siliciumkomponente^{($)} | kg/h | 0 | 0 | PTS 10 | 0 | 0 | 0 | 0 | PTS 10 | 0 |
| Wasserstoff | Nm³/h | 58 | 53 | 47 | 40 | 2,3 | 58 | 2,3 | 47 | 2,3 |
| Primärluft | Nm³/h | 190 | 215 | 250 | 260 | 4,0 | 160 | 8 | 315 | 5,0 |
| Sekundärluft | Nm³/h | 60 | 60 | 65 | 65 | 6 | 60 | 6 | 0 | 21,0 |
| Eingangstemperature(*) | °C | 90 | 90 | 90 | 90 | 90 | 90 | 90 | 90 | 90 |
| Sekundärluft/ Primärluft | | 0,32 | 0,28 | 0,26 | 0,25 | 1,5 | 0,32 | 0,75 | 0 | 4,2 |
| V_{Brenner}⁽⁺⁾ | m/s | 30,3 | 33,6 | 35,9 | 36,3 | 25,3 | 26,9 | 37,3 | 43,6 | 28, 9 |

| | | | | | | | | | | |
|---|---|---|---|---|---|---|---|---|---|---|
| (*) Für Gemisch aus H₂, Primärluft SiCl₄, 2. und ggf. 3. Siliciumkomponente ($) MTCS = Methyltrichlorsilan; TCS = Trichlorsilan; DCS = Dichlordisilan, PTS = Propyltrichlorsilan; (+) = Austrittsgeschwindigkeit aus Brenner | | | | | | | | | | |

**Tabelle 3: Reaktionsenthalpie, Wärmekapazität und adiabate Flammentemperatur**

| | | **gemäß Erfindung** | | | | | **Vergleich** | | | |
|---|---|---|---|---|---|---|---|---|---|---|
| **Beispiel** | | **1** | **2** | **3** | **4** | **5** | **6** | **7** | **8** | **9** |
| Summe Reaktionsenthalpien der Teilreaktionen | KW | -214,2 | -229,2 | -251,3 | -257,9 | -8,4 | -214,2 | -8,4 | -251,3 | -8,4 |
| Wärmekapazität Produkte | KJ/s·K | 0,16 | 0,17 | 0,19 | 0,19 | 0,01 | 0,15 | 0,01 | 0,19 | 0,01 |
| adiabate Flammtemperatur | °C | 1424 | 1427 | 1425 | 1427 | 1402 | 1536 | 1132 | 1440 | 712 |

**Tabelle 4 : Analytische Daten der Siliciumdioxidpulver**

| | | **gemäß Erfindung** | | | | | **Vergleich** |
|---|---|---|---|---|---|---|---|
| **Beispiel** | | **1** | **2** | **3** | **4** | **5** | **10^{(*)}** |
| BET-Oberfläche | m²/g | 298 | 302 | 310 | 307 | 293 | 301 |
| Mittlere Aggregatfläche | nm² | 5082 | 5293 | 5661 | 5081 | 5876 | 8087 |
| Mittlerer equivalenter Kreisdurchmesser | nm | 66 | 71 | 72 | 65 | 75 | 85 |
| Mittlerer Aggregatumfang | nm | 623 | 686 | 634 | 624 | 727 | 888 |
| Mittlerer maximaler Aggregatdurchmesser | nm | 121 | 130 | 129 | 121 | 138 | 155 |
| Mittlerer minimaler Aggregatdurchmesser | nm | 74 | 80 | 81 | 75 | 85 | 96 |
| Mittlerer Primärpartikeldurchmesser | nm | 10 | 9,6 | 11 | 10 | 10 | 11 |
| C-Gehalt | ppm | <10 | <10 | 20 | 260 | <10 | 100 |
| Cl-Gehalt | ppm | 100 | 20 | 40 | 90 | 150 | 30 |
| Relative Viskosität bei 2,'7 s⁻¹ | % | 72 | 69 | 73 | 70 | 89 | 100 |
| Relative Einarbeitungszeit | % | 61 | 64 | 65 | 63 | 71 | 100 |

| | | | | | | | |
|---|---|---|---|---|---|---|---|
| (*): Aerosil® 300, Degussa AG. | | | | | | | |

## Patentansprüche

1. Pyrogen hergestelltes Siliciumdioxidpulver, in Form von Aggregaten von Primärpartikeln mit einer BET-Oberfläche von 300 ± 25 m²/g,
**dadurch gekennzeichnet,**
**dass** die Aggregate
- eine mittlere Fläche von 4800 bis 6000 nm²,
- einen mittleren, äquivalenten Kreisdurchmesser (ECD = Equivalent Circle Diameter) von 60 bis 80 nm und
- einen mittleren Umfang von 580 bis 750 nm aufweisen.

2. Pyrogen hergestelltes Siliciumdioxidpulver nach Anspruch 1,
**dadurch gekennzeichnet,**
**dass** die Aggregate
- eine mittlere Fläche von 5000 bis 5700 nm²,
- einen mittleren, äquivalenten Kreisdurchmesser von 65 bis 75 nm und
- einen mittleren Umfang von 600 bis 720 nm aufweisen.

3. Pyrogen hergestelltes Siliciumdioxidpulver nach den Ansprüchen 1 oder 2,
**dadurch gekennzeichnet,**
**dass** der maximale Aggregatdurchmesser zwischen 100 und 140 nm und der minimale Aggregatdurchmesser zwischen 60 und 90 nm ist.

4. Pyrogen hergestelltes Siliciumdioxidpulver nach den Ansprüchen 1 bis 3,
**dadurch gekennzeichnet,**
**dass** der Chloridgehalt kleiner als 250 ppm ist.

5. Pyrogen hergestelltes Siliciumdioxidpulver nach den Ansprüchen 1 bis 4,
**dadurch gekennzeichnet,**
**dass** der Kohlenstoffgehalt kleiner als 500 ppm ist.

6. Verfahren zur Herstellung des Siliciumdioxidpulvers gemäß den Ansprüchen 1 bis 5,
**dadurch gekennzeichnet,**
**dass** man
- ein Gemisch von Siliciumverbindungen, getrennt oder gemeinsam, verdampft, die Dämpfe mittels eines Traggases in eine Mischkammer überführt, mit
- SiCl₄ als erster Komponente mit einem Anteil 60 bis 100 Gew.-% bezogen auf das Gemisch, und
- einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇)SiCl₃, mit einem Anteil von 0 bis 40 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumverbindungen, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,05 bis 4 liegt,
- anschließend den Feststoff von gasförmigen Stoffen abtrennt, und nachfolgend den Feststoff mit Wasserdampf behandelt,
wobei
- die Gesamtmenge an Sauerstoff mindestens ausreichend ist zur vollständigen Verbrennung des Brenngases und der Siliciumverbindungen und
- die Menge der Einsatzstoffe bestehend Siliciumverbindungen, Brenngas, Primärluft und Sekundärluft so gewählt ist, dass eine adiabate Flammentemperatur T_{ad} von 1390 bis 1450°C resultiert, mit
T_{ad} = Temperatur Einsatzstoffe + Summe der Reaktionsenthalpien der Teilreaktionen / Wärmekapazität der Stoffe, die die Reaktionskammer verlassen, umfassend Siliciumdioxid, Wasser, Chlorwasserstoff, Kohlendioxid Sauerstoff, Stickstoff, und gegebenenfalls des Traggases, wenn dieses nicht Luft oder Stickstoff ist,
wobei die spezifische Wärmekapazität dieser Stoffe bei 1000°C zugrunde gelegt wird.

7. Verfahren nach Anspruch 6,
**dadurch gekennzeichnet,**
**dass** die Temperatur der Einsatzstoffe 90°C ± 40°C ist.

8. Verfahren nach den Ansprüchen 6 oder 7,
**dadurch gekennzeichnet,**
**dass** die Austrittsgeschwindigkeit des Reaktionsgemisches aus der Mischkammer in den Reaktionsraum 10 bis 80 m/s ist.

9. Verwendung des pyrogen hergestellten Siliciumdioxidpulvers gemäß der Ansprüche 1 bis 5 als Füllstoff in Kautschuk, Silikonkautschuk und Kunststoffen, zur Einstellung der Rheologie in Farben und Lacken, als Polyester, als Träger für Katalysatoren, zur Herstellung von Dispersionen.

## Claims

1. Fumed silica powder in the form of aggregates of primary particles having a BET surface area of 300 ± 25 m²/g,
**characterized in that**
the aggregates have
- a mean area of 4800 to 6000 nm²,
- a mean equivalent circle diameter (ECD) of 60 to 80 nm and
- a mean circumference of 580 to 750 nm.

2. Fumed silica powder according to Claim 1,
**characterized in that**
the aggregates have
- a mean area of 5000 to 5700 nm²,
- a mean equivalent circle diameter of 65 to 75 nm and
- a mean circumference of 600 to 720 nm.

3. Fumed silica powder according to Claim 1 or 2,
**characterized in that**
the maximum aggregate diameter is between 100 and 140 nm and the minimum aggregate diameter is between 60 and 90 nm.

4. Fumed silica powder according to Claims 1 to 3,
**characterized in that**
the chloride content is less than 250 ppm.

5. Fumed silica powder according to Claims 1 to 4,
**characterized in that**
the carbon content is less than 500 ppm.

6. Process for producing the silica powder according to Claims 1 to 5,
**characterized in that**
- a mixture of silicon compounds is evaporated separately or together, the vapours are transferred to a mixing chamber by means of a carrier gas, comprising
- SiCl₄ as a first component with a proportion of 60 to 100% by weight, based on the mixture, and
- a second component selected from the group comprising H₃SiCl, H₂SiCl₂, HSiCl₃, CH₃SiCl₃, (CH₃) ₂SiCl₂, (CH₃)₃SiCl, (n-C₃H₇)SiCl₃, with a proportion of 0 to 40% by weight, based on the mixture,
- and, separately therefrom, a combustion gas, primary air which may optionally be enriched with oxygen and/or preheated, is transferred into the mixing chamber,
- the mixture of the vapour of the silicon compounds, combustion gas and primary air is ignited in a burner and the flame burns into a reaction chamber,
- secondary air which surrounds the flame is introduced into the reaction chamber, the ratio of secondary air/primary air being within a range from 0.05 to 4,
- then the solid is removed from gaseous substances, and then the solid is treated with steam,
where
- the total amount of oxygen is at least sufficient for full combustion of the combustion gas and of the silicon compounds and
- the amount of the feedstocks consisting of silicon compounds, combustion gas, primary air and secondary air is selected so as to result in an adiabatic flame temperature T_{ad} of 1390°C to 1450°C,
where
T_{ad} = feedstock temperature + sum of the reaction enthalpies of the component reactions/ heat capacity of the substances which leave the reaction chamber, comprising silica, water, hydrogen chloride, carbon dioxide, oxygen, nitrogen, and optionally the carrier gas if it is not air or nitrogen,
based on the specific heat capacity of the substances at 1000°C.

7. Process according to Claim 6,
**characterized in that**
the temperature of the feedstocks is 90°C ± 40°C.

8. Process according to Claim 6 or 7,
**characterized in that**
the exit velocity of the reaction mixture from the mixing chamber into the reaction chamber is 10 to 80 m/s.

9. Use of the fumed silica powder according to Claims 1 to 5 as a filler in rubber, silicone rubber and plastics, for adjusting rheology in paints and coating materials, as a polyester, as a support for catalysts, for production of dispersions.

## Revendications

1. Poudre de silice produite par pyrogénation, sous forme d'agrégats de particules primaires, ayant une surface BET de 300 ± 25 m²/g, **caractérisée en ce que** les agrégats présentent
- une surface moyenne de 4 800 à 6 000 nm²,
- un diamètre de cercle équivalent (ECD = Equivalent Circle Diameter) moyen de 60 à 80 nm et
- une circonférence moyenne de 550 à 750 nm.

2. Poudre de silice produite par pyrogénation, selon la revendication 1, **caractérisée en ce que** les agrégats présentent
- une surface moyenne de 5 000 à 5 700 nm²,
- un diamètre de cercle équivalent moyen de 65 à 75 nm et
- une circonférence moyenne de 600 à 720 nm.

3. Poudre de silice produite par pyrogénation, selon la revendication 1 ou 2, **caractérisée en ce que** le diamètre maximum d'agrégat est compris entre 100 et 140 nm et le diamètre minimum d'agrégat est compris entre 60 et 90 nm.

4. Poudre de silice produite par pyrogénation, selon les revendications 1 à 3, **caractérisée en ce que** la teneur en chlorures est inférieure à 250 ppm.

5. Poudre de silice produite par pyrogénation, selon les revendications 1 à 4, **caractérisée en ce que** le teneur en carbone est inférieure à 500 ppm.

6. Procédé pour la production de la poudre de silice selon les revendications 1 à 5, **caractérisé en ce que**
- on vaporise un mélange de composés siliciés, séparément ou ensemble, on transfère les vapeurs, au moyen d'un gaz vecteur, dans une chambre de mélange, avec
- du SiCl₄ en tant que premier composant, en une proportion de 60 à 100 % en poids, par rapport au mélange, et
- un second composant choisi dans le groupe comprenant H₃SiCl, H₂SiCl₂, HSiCl₃, CH₃SiCl₃, (CH₃)₂SiCl₂, (CH₃)₃SiCl, (n-C₃H₇)SiCl₃, en une proportion de 0 à 40 % en poids, par rapport au mélange,
- et séparément de ceux-ci, on transfère dans la chambre de mélange un gaz combustible, de l'air primaire, qui peut éventuellement être enrichi avec de l'oxygène et/ou préchauffé,
- on allume dans un brûleur le mélange composé de la vapeur des composés siliciés, du gaz combustible et d'air primaire et la flamme brûle à l'intérieur d'une chambre de réaction,
- on introduit dans la chambre de réaction de l'air secondaire qui entoure la flamme, de sorte que le rapport air secondaire/air primaire se situe dans une plage allant de 0,05 à 4,
- on sépare ensuite le solide des substances gazeuses et ensuite on traite le solide par de la vapeur d'eau,
- la quantité totale d'oxygène étant au moins suffisante pour la combustion totale du gaz combustible et des composés siliciés et
- la quantité des substances de départ, consistant en composés siliciés, gaz combustible, air primaire et air secondaire, étant choisie de manière qu'il en résulte une température de flamme adiabatique T_{ad} de 1 390 à 1 450 °C, où
T_{ad} = température des substances de départ + somme des enthalpies de réaction des réactions partielles / capacité calorique des substances qui quittent la chambre de réaction, comprenant silice, eau, chlorure d'hydrogène, dioxyde de carbone, oxygène, azote, et éventuellement du gaz vecteur, lorsque celui-ci n'est pas l'air ni l'azote,
la capacité calorique spécifique de ces substances à 1 000 °C étant prise pour base.

7. Procédé selon la revendication 6, **caractérisé en ce que** la température des substances de départ est 90 °C ± 40 °C.

8. Procédé selon la revendication 6 ou 7, **caractérisé en ce que** la vitesse de sortie du mélange réactionnel sortant de la chambre de mélange pour pénétrer dans la chambre de réaction est de 10 à 80 m/s.

9. Utilisation de la poudre de silice produite par pyrogénation selon les revendications 1 à 5, en tant que charge dans du caoutchouc, du caoutchouc silicone et des matières plastiques, pour l'ajustement de la rhéologie dans des peintures et vernis, en tant que polyester, comme support pour catalyseurs et pour la préparation de dispersions.
